# EUROPÄISCHE PATENTSCHRIFT

(11) **EP 1 223 353 B1**
(45) Veröffentlichungstag und Bekanntmachung des Hinweises auf die Patenterteilung: **22.09.2004**
(21) Anmeldenummer: 02000419.8
(22) Anmeldetag: 08.01.2002
(51) Int. Cl.: F16B 13/14, F16B 37/12

(54) **Verfahren zum Einbringen einer Schraube in einen Körper aus Stein, insbesondere in einen Betonkörper, und Formkörper zur Verwendung bei diesem Verfahren**
Method of placing a screw in a stone body, in particular in a concrete body, and device being used for this method
Procédé pour placer une vis dans un corps en pierre, en particulier dans un corps en beton, et une pièce utilisée dans ce procédé

(30) Priorität: 10.01.2001 DE 10100733
(43) Veröffentlichungstag der Anmeldung: 17.07.2002
(73) Patentinhaber: RST-Rail Systems and Technologies GmbH, 39179 Magdeburg-Barleben (DE)
(72) Erfinder: Gärlich, Hermann, Dipl.-Ing. habil., 39175 Gerwisch (DE)
(74) Vertreter: Hilleringmann, Jochen, Dipl.-Ing.

(56) Entgegenhaltungen:
- DE-A- 4 419 797
- US-A- 4 642 964
- US-A- 5 368 792

## Beschreibung

Die Erfindung betrifft ein Verfahren zum Einbringen einer Schraube in einen Körper aus Stein, bei dem es sich insbesondere um einen Betonkörper handelt. Ferner betrifft die Erfindung einen Formkörper zur Verwendung bei dem vorstehend genannten Verfahren.

In der Bauindustrie ist es oftmals erforderlich, zu Befestigungszwecken in einen Körper aus Stein eine Schraube einzubringen. Als ein Anwendungsfall sei hier die Herstellung eines Schienenweges genannt, bei dem eine Vielzahl von die Schiene haltenden Rippenplatten an einem Untergrund aus Beton, der entweder als durchgehende Betonplatte oder aus mehreren Betonschwellen besteht, befestigt werden.

Die Befestigung von Schrauben in insbesondere Betonkörpern erfolgt im allgemeinen durch Dübel, die in eine in dem Betonkörper ausgebildete Bohrung eingebracht werden. Diese Dübel sind teilweise in der Bohrung festgeklebt. Der eigentliche Halt der Schraube erfolgt dann über den Dübel, der seinerseits entweder durch Verkleben oder durch Verspannen in dem Betonkörper gehalten ist. Das Vorsehen des Dübels erfordert zum einen zusätzliche Materialkosten und zum anderen einen zusätzlichen Arbeitsschritt. Dies erhöht insgesamt die Fertigungs- und Montagekosten. Aus US-A-4,642,964 und US-A-5,368,792 ist jeweils ein Verfahren zum Einbringen einer Schraube in einen Körper aus Stein bekannt, bei dem in den Körper eine Bohrung eingebracht wird, deren Innendurchmesser größer ist als der Außendurchmesser der in der Bohrung zu verankernden Schraube. Die eingebrachte Bohrung wird mit einer aushärtbaren Vergussmasse gefüllt, in die anschließend die einzubringende Schraube eingesetzt wird. Somit umgibt die Vergussmasse die Schraube allseitig. Nach Aushärtung der Vergussmasse hat sich in dem Körper ein Hülsenabschnitt aus Vergussmasse gebildet, der ein Innengewinde aufweist, das im Eingriff mit dem Außengewinde der Schraube steht.

Der Erfindung liegt die Aufgabe zu Grunde, ein Verfahren zum Einbringen einer Schraube in einen Körper aus Stein, insbesondere in einen Betonkörper anzugeben, das weniger materialintensiv und montagefreundlich ist.

Zur Lösung dieser Aufgabe wird mit der Erfindung ein Verfahren vorgeschlagen, bei dem
- in den Körper eine Bohrung eingebracht wird, deren Durchmesser größer ist als der Außendurchmesser des Gewindeabschnitts der Schraube,
- die Bohrung zumindest teilweise mit einer aushärtbaren fließfähige Vergussmasse befüllt wird,
- in die Bohrung ein Formkörper mit einer Außenkontur eingebracht wird, die gleich der Außenkontur des Außengewindeabschnitts der Schraube ist, wobei der Formkörper zumindest einen Zentriervorsprung zur Anlage an der Innenseite der Bohrung und zur Zentrierung des Formkörpers in der Bohrung aufweist, und der Zwischenraum zwischen dem Formkörper und der Innenseite der Bohrung unter Verdrängung der fließfähigen Vergussmasse von dieser ausgefüllt wird,
- die fließfähige Vergussmasse aushärtet,
- der Formkörper aus der Bohrung entfernt wird, wobei die ausgehärtete Vergussmasse eine Innenauskleidung bildet, die auf ihrer der Innenseite der Bohrung abgewandten Innenseite ein durch die Außenkontur des Formkörpers bestimmtes Innengewinde aufweist, und
- die Schraube mit deren Außengewindeabschnitt in das Innengewinde der Innenauskleidung der Bohrung eingeschraubt wird.

Sinngemäß wird also bei dem erfindungsgemäßen Verfahren in eine in den Körper eingebrachte Bohrung ein Innengewinde geformt, das zum Außengewinde der einzubringenden Schraube komplementär ist. Der Innengewindeteil der Bohrung wird durch einen Gieß- und Aushärtungsprozess der Gussmasse hergestellt. Dazu wird in die in den Körper angebrachte Bohrung, die einen größeren Durchmesser als der Außendurchmesser des Gewindeabschnitts der Schraube aufweist, ein Formkörper eingebracht, der ein Schaftteil aufweist, das eine mit der einzuschraubenden Schraube identische Außengewindekontur aufweist. Der Formkörper ist darüber hinaus an seinem Schaftteil mit mindestens einem Zentriervorsprung versehen, der an der Innenseite der Bohrung anliegt und dafür sorgt, dass der Schaftteil des Formkörpers und damit dessen Außengewindekontur zentrisch in der Bohrung positioniert ist. In den Zwischenraum zwischen dem Formkörper und der Innenseite der Bohrung gelangt eine fließfähige und auf Grund einer chemischen Reaktion aushärtbare Masse (Epoxydharz, Kleber o.dgl. Klebemassen). Diese Masse wurde entweder vor dem Einsetzen des Formkörpers in die Bohrung eingebracht, um dann beim Einsetzen des Formkörpers unter Verdrängung den Ringraum auszufüllen, oder aber wird erst nach dem Einsetzen des Formkörpers in die Bohrung in den Zwischenraum zwischen dem Formkörper und der Innenseite der Bohrung eingebracht.

Nachdem die fließfähige Vergussmasse ausgehärtet ist, wird der Formkörper aus der Bohrung entfernt. Hierbei ist zu beachten, dass je nach Wahl des Materials des Formkörpers dieser nicht vollständig aus der nunmehr mit der ausgehärteten Innenschicht (Innenauskleidung) versehenen Bohrung entfernt werden muss. Besteht der Formkörper beispielsweise aus einem expandierten Polystyrol (EPS), so könnten Reste des Formkörpers in der Bohrung verbleiben, ohne dass dies beim anschließenden Einschrauben der Schraube in das Innengewinde der Innenschicht der Bohrung hinderlich ist. Material des Formkörpers kann beispielsweise durch Einbringen einer Bohrung in sein Schaftteil ausgetragen werden. Schließlich ist es auch möglich, das Material des Formkörpers chemisch aus der Bohrung zu entfernen. Letztendlich ist es aber auch denkbar, dass der Formkörper in der Bohrung verbleibt, um dann beim Einschrauben der Schraube gänzlich komprimiert und verdrängt zu werden. Verbleibt Material des Formkörpers in der Bohrung, so ist es zweckmäßig, wenn der Formkörper einen über den Außengewindeabschnitt der einzuschraubenden Schraube überstehenden Fortsatz aufweist, der nach seiner Entfernung einen Hohlraum definiert, der wiederum beim Einschrauben der Schraube verdrängtes Material des Formkörpers aufnehmen kann.

Die radiale Weite der Vorsprünge des Schaftteils des Formkörpers definieren die Dicke der Innenschicht, an deren Innenseite sich die zum Außengewinde der Schraube komplementäre Innengewindestruktur bildet. Damit die fließfähige Masse ungestört entweder durch Verdrängung beim Einsetzen des Formkörpers oder durch Hineingießen in den Ringraum zwischen den Formkörper und die Innenseite der Bohrung, also axial am Formkörper vorbei fließen kann, sollten sich die Vorsprünge lediglich über Teilbereiche der Umfangserstreckung des Schaftteils erstrecken. Eine vorteilhafte Variante, bei der vergleichsweise wenig Vorsprünge vorgesehen werden müssen, ist darin zu sehen, dass jeweils um 90° versetzt in Umfangsrichtung und um das Steigungsmaß des Gewindes in axialer Richtung versetzt angeordnete einzelne Vorsprünge am Schaftteil des Formkörpers vorgesehen sind.

Das erfindungsgemäße Verfahren lässt sich nicht nur im Rahmen des erstmaligen Einbringens einer Schraube in eine Betonkörper sondern auch dann einsetzen, wenn aus beispielsweise Gründen der Reparatur eine alte Verschraubung gelöst und der dabei verwendete Dübel ausgetauscht wird. Nach dem Entfernen des Dübels mit gegebenenfalls der diesen haltenden Klebermasse liegt wiederum der im Zusammenhang mit dem erfindungsgemäßen Verfahren beschriebene obige Ausgangszustand vor, dass nämlich in dem Betonkörper eine Bohrung ausgebildet ist.

Ferner ist das erfindungsgemäße Verfahren nicht nur bei Sacklochbohrungen einsetzbar, sondern auch bei Bohrungen, die um einen Entwässerungskanal (Entwässerungsbohrung) bis zu der dem Bohrloch gegenüberliegenden Seite des Betonkörpers verlängert sind. Derartige Bohrungen mit Entwässerungsmöglichkeit findet man insbesondere im Gleisbau. Der Formkörper ist bezüglich seiner axialen Länge und seines in die Bohrung eingetauchten Endes derart ausgebildet, dass er die sich vom Grund der Bohrung für die Verschraubung aus erstreckende Entwässerungsbohrung verschließt. Nun kann die Vergussmasse in den Ringraum zwischen dem Formkörper und der Innenseite der Bohrung eingebracht werden. Nach Aushärtung und Entfernung des Formkörper sowie Einschrauben der Schraube ist wiederum die Möglichkeit gegeben, dass zwischen Schraube und der Innenschicht der Bohrung eindringendes Wasser über die Entwässerungsbohrung nach unten abfließen kann.

Eine alternative Ausgestaltung des zuvor beschriebenen Verfahrens ist dadurch gekennzeichnet, dass im Unterschied zur zuvor beschriebenen Variante des erfindungsgemäßen Verfahrens nach Einbringen der Bohrung in den Körper zunächst der Formkörper in die Bohrung eingesetzt wird, um anschließend in den Ringzwischenraum zwischen Formkörper und Bohrung die Vergussmasse einzubringen.

Wie sich aus dem Vorstehenden ergibt, ist also der erfindungsgemäße Formkörper zur Herstellung einer eine zu dem Außengewinde einer Schraube komplementären Innengewinde aufweisenden Innenauskleidung auf der Innenseite einer Bohrung in einem Körper aus Stein, insbesondere in einem Betonkörper versehen mit
- einem Schaftteil,
- einem Außengewinde, das gleich dem Außengewinde der Schraube ist, und
- mehreren radial vom Schaftteil abstehenden und das Außengewinde überragenden Vorsprüngen zur Anlage des Schaftteils an und Zentrierung des Schaftteils in der Bohrung des Körpers.

Die Erfindung wird nachfolgend anhand der Zeichnung näher erläutert. Dabei zeigen im einzelnen:

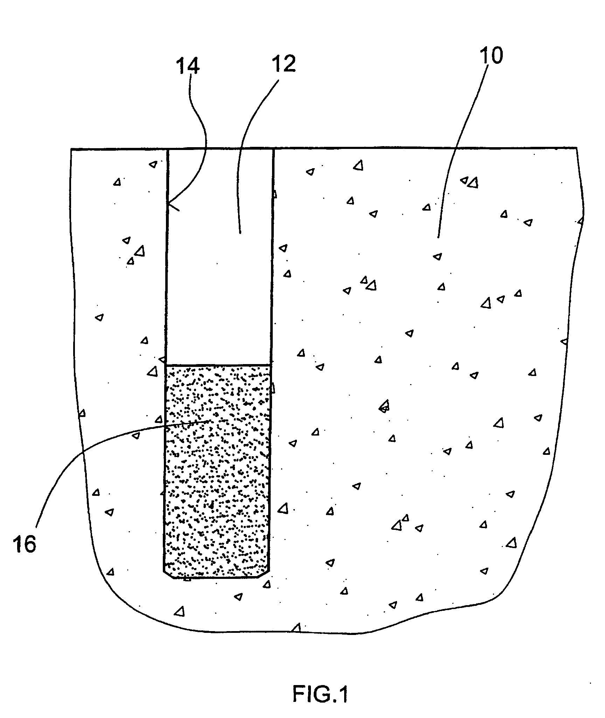

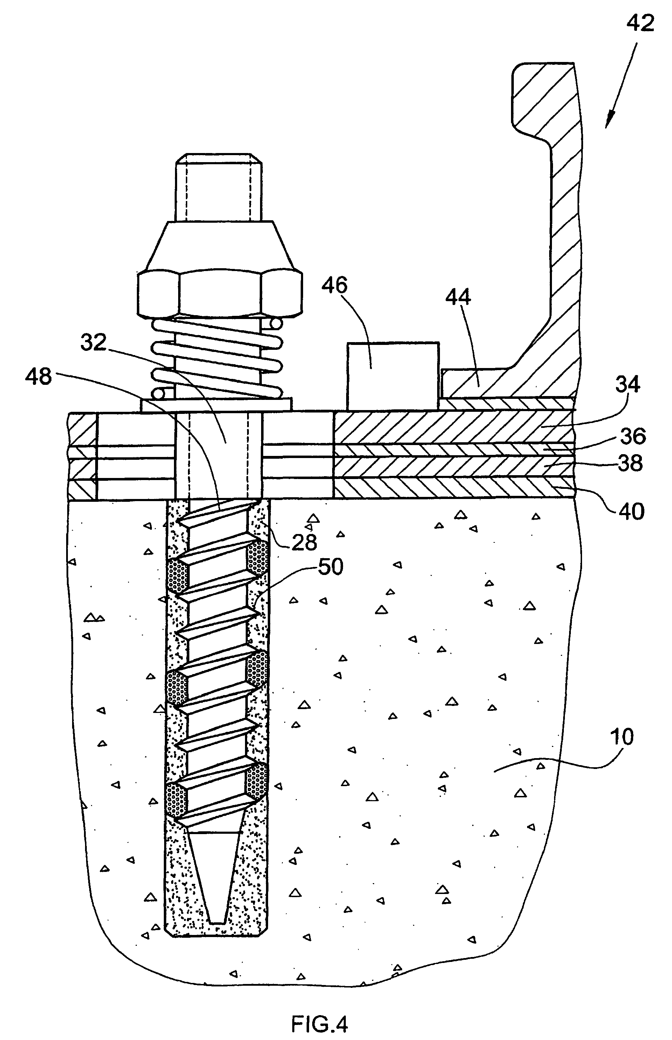

- Fign. 1 bis 4: die einzelnen Verfahrensschritte zur Herstellung einer Verschraubung in einem Betonkörper, wobei in Fig. 4 noch zusätzlich dargestellt ist, dass diese Verschraubung zur Befestigung einer Rippenplatte für eine Schiene dient.

Um an einem Betonkörper 10, bei dem es sich in diesem Ausführungsbeispiel um eine Schienenschwelle aus Beton handelt, eine der Schienenbefestigung dienende Rippenplatte befestigen zu können, wird gemäß Fig. 1 zunächst in den Betonkörper 10 eine Bohrung 12 mit einer Innenseite 14 eingebracht.

Diese Bohrung 12 wird anschließend bis zu einer gewissen Höhe mit einer fließfähigen aushärtbaren Masse 16 (Klebermasse o.dgl. aushärtbaren Material) gefüllt. Diese Situation ist in Fig. 1 gezeigt.

Anschließend wird in die Bohrung 12 ein Formkörper 18 aus beispielsweise EPS eingesetzt. Dieser Formkörper 18 weist ein Schaftteil 20 auf, der ein Außengewinde 22 aufweist, das in diesem Fall wie das Außengewinde einer Bundschwellenschraube für den Gleisbau ausgebildet ist. Zwischen den einzelnen Windungen des Außengewindes 22 befinden sich zum Teil radial vom Schaftteil 20 abstehende und gleichmäßig über den Umfang des Schaftteils 20 verteilt angeordnete Zentriervorsprünge 24, die radial über das Außengewinde 22 überstehen und an der Innenseite 14 der Bohrung 12 anliegen. Der durch die insbesondere diametral gegenüberliegenden Zentriervorsprünge 24 definierte Außenumfang des Formkörpers 18 ist also im wesentlichen gleich dem Innendurchmesser der Bohrung 12.

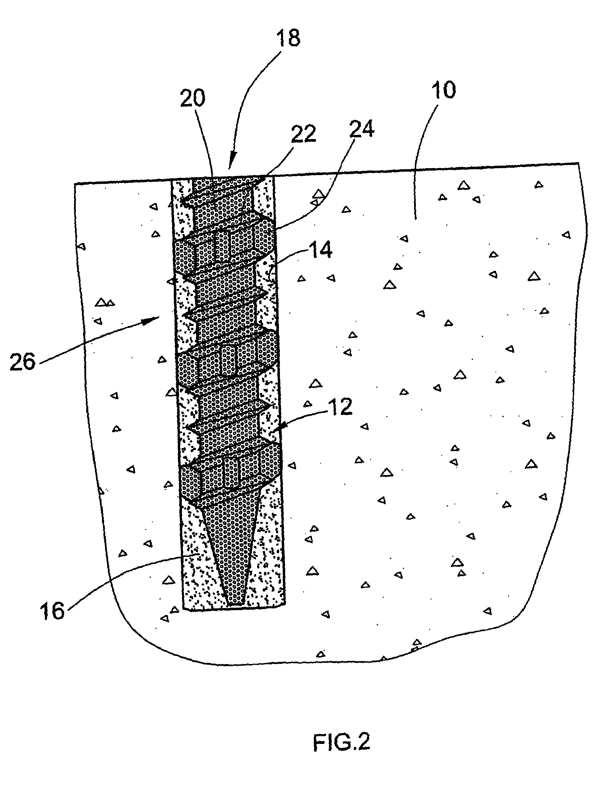

Beim Einsetzen des Formkörpers 18 in die teilweise mit der Vergussmasse 16 gefüllte Bohrung 12 verdrängt der Formkörper 18 diese Vergussmasse 16, so dass der Ringraum 26 zwischen dem Schaftteil 20 und der Innenseite 14 der Bohrung 12 mit der Vergussmasse 16 ausgefüllt wird. Die Menge an in die Bohrung 12 eingebrachter Vergussmasse ist dabei so bemessen, dass sicherheitshalber beim Einsetzen des Formkörpers 18 in die Bohrung 12 Vergussmasse aus dieser Bohrung austritt. Dann nämlich kann man mit Sicherheit davon ausgehen, dass der gesamte Ringraum 26 mit Vergussmasse 16 ausgefüllt ist. Diese Situation ist in Fig. 2 gezeigt.

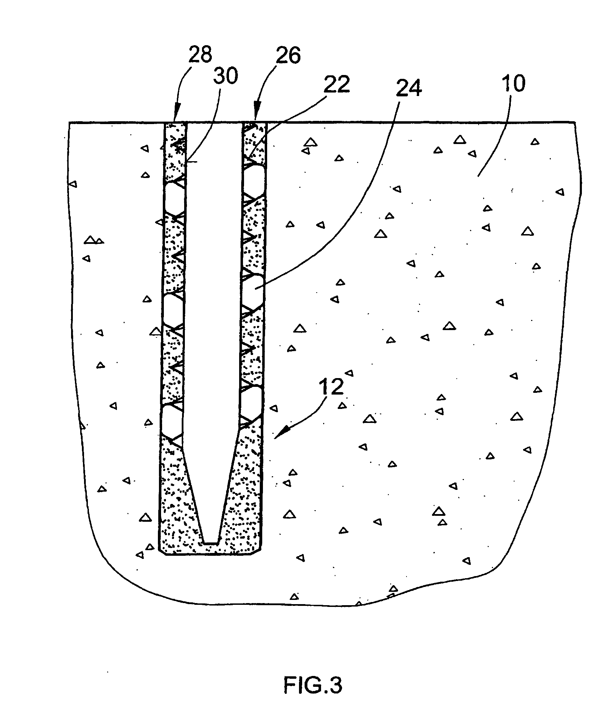

Nachdem die Vergussmasse 16 ausgehärtet ist, wird in diesem Ausführungsbeispiel zumindest der Schaftteil 20 des Formkörpers 18 durch beispielsweise Einbringen einer Bohrung mit dem Außendurchmesser des Schaftteils 20 entfernt. Diese Situation ist in Fig. 3 dargestellt. Zu erkennen ist, dass dasjenige Material des Formkörpers 18, das zur Bildung des Außengewindes 22 und der Zentriervorsprünge 24 beiträgt, noch in der Bohrung oder genauer gesagt in der durch die ausgehärtete Vergussmasse 16 gebildete Innenauskleidung 28 der Bohrung 12 verbleibt. Auf der Innenseite 30 dieser Innenauskleidung 28 befindet sich nun eine Gewindestruktur, die komplementär zur Außengewindestruktur der nunmehr einzubringenden in diesem Fall als Bundschwellenschraube ausgebildete Schraube ist.

Die Situation nach dem Einbringen einer Bundschwellenschraube 32 ist in Fig. 4 gezeigt. In diesem Ausführungsbeispiel wird mit Hilfe dieser Bundschwellenschraube 32 eine Rippenplatte 34 mit zum Teil elastischen Unterlegplatten 36,38,40 auf dem Betonkörper 10 befestigt. Der Schaft der Bundschwellenschraube 32 erstreckt sich dabei durch miteinander fluchtende Löcher in der Rippenplatte 34 und den Unterlegplatten 36 bis 40. Auf der Rippenplatte 34 selbst wird dann die Schiene 42 befestigt, deren Schienenfuß 44 in den Zwischenraum zwischen zwei Rippen 46 gesetzt wird, von denen in Fig. 4 lediglich eine gezeigt ist. Ferner ist aus Gründen der besseren Übersichtlichkeit in Fig. 4 nicht die Niederhaltung der Schiene 42 auf der Rippenplatte 34 dargestellt. Hierzu bedient man sich in bekannter Weise so genannter Spannklemmen.

Anhand von Fig. 4 ist zu erkennen, dass das Außengewinde 48 der Bundschwellenschraube 32 mit dem Innengewinde 50 der Innenauskleidung 28 in Gewindeeingriff steht. Damit ist die Bundschwellenschraube 32 ohne den Einsatz einer Dübeltechnik in dem Betonkörper 10 befestigt. Dies ist sowohl im Hinblick auf die Material- als auch auf die Montagekosten vorteilhaft.

## Patentansprüche

1. Verfahren zum Einbringen einer Schraube (32) in einen Körper aus Stein (10) insbesondere in einen Betonkörper, bei dem
- in den Körper (10) eine Bohrung (12) eingebracht wird, deren Durchmesser größer ist als der Außendurchmesser des Gewindeabschnitts der Schraube (32), und
- die Bohrung (12) zumindest teilweise mit einer aushärtbaren fließfähige Vergussmasse (16) befüllt wird,
**dadurch gekennzeichnet , dass**
- in die Bohrung (12) ein Formkörper (18) mit einer Außenkontur eingebracht wird, die gleich der Außenkontur des Außengewindeabschnitts (48) der Schraube (32) ist, wobei der Formkörper (18) zumindest einen Zentriervorsprung (24) zur Anlage an der Innenseite (14) der Bohrung (12) und zur Zentrierung des Formkörpers (18) in der Bohrung (12) aufweist, und der Zwischenraum (26) zwischen dem Formkörper (18) und der Innenseite (14) der Bohrung (12) unter Verdrängung der fließfähigen Vergussmasse (16) von dieser ausgefüllt wird,
- die fließfähige Vergussmasse (16) aushärtet,
- der Formkörper (18) aus der Bohrung (12) zumindest teilweise entfernt wird, wobei die ausgehärtete Vergussmasse (16) eine Innenauskleidung (28) bildet, die auf ihrer der Innenseite (14) der Bohrung (12) abgewandten Innenseite (30) ein durch die Außenkontur des Formkörpers (18) bestimmtes Innengewinde (50) aufweist, und
- die Schraube (32) mit deren Außengewindeabschnitt (48) in das Innengewinde (50) der Innenauskleidung (28) der Bohrung (12) eingeschraubt wird.

2. Verfahren zum Einbringen einer Schraube (32) in einen Körper aus Stein (10), insbesondere in einen Betonkörper, bei dem
- in den Körper (10) eine Bohrung (12) eingebracht wird, deren Durchmesser größer ist als der Außendurchmesser des Gewindeabschnitts der Schraube (32),
**dadurch gekennzeichnet, dass**
- in die Bohrung (12) ein Formkörper (18) mit einer Außenkontur eingebracht wird, die gleich der Außenkontur des Außengewindeabschnitts (48) der Schraube (32) ist, wobei der Formkörper (18) zumindest einen Zentriervorsprung (24) zur Anlage an der Innenseite (14) der Bohrung (12) und zur Zentrierung des Formkörpers (18) in der Bohrung (12) aufweist,
- der Zwischenraum (26) zwischen dem Formkörper (18) und der Innenseite (14) der Bohrung (12) mit einem aushärtbaren fließfähigen Material ausgefüllt wird,
- die fließfähige Vergussmasse (16) aushärtet,
- der Formkörper (18) aus der Bohrung (12) zumindest teilweise entfernt wird, wobei die ausgehärtete Vergussmasse (16) eine Innenauskleidung (28) bildet, die auf ihrer der Innenseite (14) der Bohrung (12) abgewandten Innenseite (30) ein durch die Außenkontur des Formkörpers (18) bestimmtes Innengewinde (50) aufweist, und
- die Schraube (32) mit deren Außengewindeabschnitt (48) in das Innengewinde (50) der Innenauskleidung (28) der Bohrung (12) eingeschraubt wird.

3. Verfahren nach Anspruch 1 oder 2, **dadurch gekennzeichnet, dass** sich vom Grund der Bohrung (12) aus ein Durchgangskanal bis zu einer der Öffnung der Bohrung (12) abgewandten Seite des Körpers (10) erstreckt und dass der Formkörper (18) diesen Durchgangskanal im in der Bohrung (12) eingesetzten Zustand verschließt.

4. Verfahren nach einem der Ansprüche 1 bis 3, **dadurch gekennzeichnet, dass** der Formkörper (18) lediglich teilweise aus der Bohrung (12) entfernt wird.

5. Verfahren nach einem der Ansprüche 1 bis 4, **dadurch gekennzeichnet, dass** der Formkörper (18) aus einem kompressiblen Material besteht.

6. Verfahren nach einem der Ansprüche 1 bis 5, **dadurch gekennzeichnet, dass** der Formkörper (18) einen über die Außenkontur seines Gewindeabschnitts überstehenden bei der Schraube (32) nicht vorhandenen Fortsatz aufweist und dass nach dem Entfernen des Formkörpers (18) in den durch den Fortsatz bestimmten Freiraum noch an der Innenseite (30) der Innenschicht (28) aus der ausgehärteten Masse befindliche Materialreste beim Einschrauben der Schraube (32) gelangen.

7. Formkörper zur Herstellung einer ein zu dem Außengewinde einer Schraube komplementäres Innengewinde aufweisenden Innenauskleidung auf der Innenseite einer Bohrung in einem Körper aus Stein, insbesondere einem Betonkörper, insbesondere zur Verwendung bei einem Verfahren nach einem der vorstehenden Ansprüche, wobei der Formkörper versehen ist mit
- einem Schaftteil (20) und
- einem Außengewinde (22), das gleich dem Außengewinde der Schraube (32) ist,
**gekennzeichnet durch**
- mehrere radial vom Schaftteil (20) abstehende und das Außengewinde (22) überragende Vorsprünge (24) zur Anlage des Schaftteils (20) an und zur Zentrierung des Schaftteils (20) in der Bohrung (12) des Körpers (10).

8. Formkörper nach Anspruch 7, **dadurch gekennzeichnet, dass** die Vorsprünge (24) sich jeweils über einen Teil des Umfangs des Schaftteils (20) erstrecken.

## Claims

1. Method for placing a screw (32) in a stone body (10), especially a concrete body, wherein
- a bore (12) is made in the body (10), whose diameter is larger than the outer diameter of the thread section of the screw (32), and
- the bore (12) is at least partly filled with a curable flowable filling compound (16),
**characterized in that**
- a shaped body (18) is inserted into the bore (12), which has an outer contour that is the same as the outer contour of the male thread section (48) of the screw (32), the shaped body (18) comprising at least one centring projection (24) for abutment on the inner surface (14) of the bore (12) and for centring the shaped body (18) in the bore (12), and wherein the flowable filling compound (16) is displaced, filling the gap (26) between the shaped body (18) and the inner surface (14) of the bore (12),
- the flowable filling compound (16) is cured,
- the shaped body (18) is at least partly removed from the bore (12), the cured filling compound (16) forming an inner lining (28) whose inner surface (30) averted from the inner surface (14) of the bore (12) comprises a female thread (50) determined by the outer contour of the shaped body (18), and
- the male thread section (48) of the screw (32) is screwed into the female thread (50) of the inner lining (28) of the bore (12).

2. Method for placing a screw (32) in a stone body (10), especially a concrete body, wherein
- a bore (12) is made in the body (10), whose diameter is larger than the outer diameter of the thread section of the screw (32),
**characterized in that**
- a shaped body (18) is inserted into the bore (12), which has an outer contour that is the same as the outer contour of the male thread section (48) of the screw (32), the shaped body (18) comprising at least one centring projection (24) for abutment on the inner surface (14) of the bore (12) and for centring the shaped body (18) in the bore (12),
- the gap (26) between the shaped body (18) and the inner surface (14) of the bore (12) is filled with a curable flowable material,
- the flowable filling compound (16) is cured,
- the shaped body (18) is at least partly removed from the bore (12), the cured filling compound (16) forming an inner lining (28) whose inner surface (30) averted from the inner surface (14) of the bore (12) comprises a female thread (50) determined by the outer contour of the shaped body (18), and
- the male thread section (48) of the screw (32) is screwed into the female thread (50) of the inner lining (28) of the bore (12).

3. Method of claim 1 or 2, wherein a passage extends from the bottom of the bore (12) to a side of the body (10) averted from the opening of the bore (12), and wherein the shaped body (18) closes this passage when placed in the bore (12).

4. Method of one of claims 1 to 3, wherein the shaped body (18) is only partly removed from the bore (12).

5. Method of one of claims 1 to 4, wherein the shaped body (18) is made of a compressible material.

6. Method of one of claims 1 to 5, wherein the shaped body (18) has a protrusion projecting beyond the outer contour of its thread section, said protrusion not being provided at the screw (32), and wherein, after removal of the shaped body (18), material residues still present on the inner surface (30) of the inner layer (28) of cured mass get into the space formed by the protrusion when the screw (32) is screwed in.

7. Formed body for making an inner lining on the inner surface of a bore in a stone body, especially a concrete body, the female thread of the inner lining being complementary to the male thread of a screw, especially for use with a method of one of the preceding claims, wherein the shaped body is provided with
- a shaft portion (20) and
- a male thread (22) identical to the male thread of the screw (32),
**characterized by**
a plurality of projections (24) projecting radially from the shaft portion (20) and extending beyond the male thread (22), the projections being provided for the abutment of the shaft portion (20) on and the centring thereof in the bore (12) of the body (10).

8. Shaped body of claim 7, wherein the projections (24) each extend over a part of the circumference of the shaft portion (20).

## Revendications

1. Procédé pour insérer une vis (32) dans un corps en pierre (10), notamment dans un corps en béton, selon lequel
- on aménage dans le corps (10) un perçage (12), dont le diamètre est supérieur au diamètre extérieur de la section filetée de la vis (32), et
- on remplit le perçage (12) au moins en partie par une masse de scellement fluide durcissable (16),
**caractérisé en ce que**
- dans le perçage (12) on insère un corps de forme (18) possédant un contour extérieur qui est identique au contour extérieur de la section filetée extérieurement (48) de la vis (32), le corps de forme (18) comportant au moins une partie saillante de centrage (4) destinée à s'appliquer contre la face intérieure (14) du perçage (12) et à centrer le corps de forme (18) dans le perçage (12), et on remplit l'espace intercalaire (26) entre le corps de forme (18) et la face intérieure (14) du perçage (12) avec la masse de scellement fluide (16), moyennant le refoulement de cette dernière,
- on fait durcir la masse de scellement fluide (16),
- on retire au moins partiellement le corps de forme (18) hors du perçage (12), la masse de scellement durcie (16) formant un habillage intérieur (28), qui possède, sur son côté intérieur (30) tourné à l'opposé du côté intérieur (14) du perçage (12), un taraudage (50), qui est déterminé par le contour extérieur du corps de forme (18), et
- on visse la vis (32), au moyen de sa partie filetée extérieure (48) dans le taraudage (50) de l'habillage intérieur (28) du perçage (12).

2. Procédé pour insérer une vis (32) dans un corps en pierre (10), notamment un corps en béton, selon lequel
- dans le corps (10) on aménage un perçage (12), dont le diamètre est supérieur au diamètre extérieur de la section filetée de la vis (32),
**caractérisé en ce que**
- dans le perçage (12) on insère un corps de forme (18) possédant un contour extérieur qui est identique au contour extérieur de la section filetée extérieurement (48) de la vis (32), le corps de forme (18) comportant au moins une partie saillante de centrage (24) destinée à s'appliquer contre la face intérieure (14) du perçage (12) et à centrer le corps de forme (18) dans le perçage (12),
- on remplit d'un matériau fluide durcissable l'espace intercalaire (26) présent entre le corps de forme (18) et la face intérieure (14) du perçage (12),
- on fait durcir la masse de scellement fluide (16),
- on retire au moins partiellement le corps de forme (18) du perçage (12), la masse de scellement durcie (16) formant un habillage intérieur (28), qui possède, sur son côté intérieur (30) tourné à l'opposé du côté intérieur (14) du perçage (12), un taraudage (50), qui est déterminé par le contour extérieur du corps de forme (18), et
- la vis (32) est vissée, au moyen de sa partie filetée extérieure (48), dans le taraudage (50) de l'habillage intérieur (28) du perçage (12).

3. Procédé selon la revendication 1 ou 2, **caractérisé en ce qu'**un canal traversant s'étend depuis le fond du perçage (12) jusqu'à un côté du corps (10), tourné à l'opposé de l'ouverture du perçage (12), et que le corps de forme (18) ferme ce canal traversant, dans l'état dans lequel il est inséré dans le perçage (12).

4. Procédé selon l'une des revendications 1 à 3, **caractérisé en ce que** le corps de forme (18) est retiré seulement en partie hors du perçage (12).

5. Procédé selon l'une des revendications 1 à 4, **caractérisé en ce que** le corps de forme (18) est réalisé en un matériau compressible.

6. Procédé selon l'une des revendications 1 à 5, **caractérisé en ce que** le corps de forme (18) comporte un prolongement qui fait saillie au-delà du contour extérieur de sa section filetée et n'est pas présent au niveau de la vis (32), et qu'après le retrait du corps de forme (18), des restes du matériau encore situés sur la face intérieure (30) de la couche intérieure (28) et provenant de la masse durcie, parviennent dans l'espace libre déterminé par le prolongement, lors du vissage de la vis (32).

7. Corps de forme pour fabriquer un habillage intérieur, possédant un taraudage complémentaire du filetage extérieur d'une vis, sur la face intérieure d'un perçage dans un corps en pierre, notamment un corps en béton, en particulier pour son utilisation dans un procédé selon l'une des revendications précédentes, le corps de forme étant pourvu
- d'une partie formant tige (20), et
- d'un filetage extérieur (22), qui est identique au filetage extérieur de la vis (32),
**caractérisé par**
- plusieurs parties saillantes (24), qui font saillie radialement à partir de la partie formant tige (20) et dépassent le filetage extérieur (22) et sont destinées à appliquer la partie de la tige (20) et à centrer la partie de la tige (20) dans le perçage (12) du corps (10).

8. Corps de forme selon la revendication 7, **caractérisé en ce que** les parties saillantes (24) s'étendent respectivement sur une partie de la périphérie de la partie formant tige (20).
